# EUROPÄISCHE PATENTSCHRIFT

(11) **EP 1 782 666 B1**
(45) Veröffentlichungstag und Bekanntmachung des Hinweises auf die Patenterteilung: **17.12.2014**
(21) Anmeldenummer: 05774030.0
(22) Anmeldetag: 17.08.2005
(51) Int. Cl.: G06F 1/20, G06F 1/26

(54) **ENERGIEVERSORGUNGSVORRICHTUNG FÜR EIN ELEKTRISCHES GERÄT UND VERFAHREN ZUR BEREITSTELLUNG ELEKTRISCHER ENERGIE AN KOMPONENTEN EINES ELEKTRISCHEN GERÄTS**
POWER SUPPLY UNIT FOR AN ELECTRICAL APPLIANCE, AND METHOD FOR PROVIDING ELECTRIC POWER ON COMPONENTS OF AN ELECTRICAL APPLIANCE
SYSTEME D'ALIMENTATION EN ENERGIE DESTINE A UN APPAREIL ELECTRIQUE ET PROCEDE POUR FOURNIR DE L'ENERGIE ELECTRIQUE A DES COMPOSANTS D'UN APPAREIL ELECTRIQUE

(30) Priorität: 26.08.2004 DE 102004042034
(43) Veröffentlichungstag der Anmeldung: 09.05.2007
(73) Patentinhaber: Xylem IP Holdings LLC, White Plains, NY 10604 (US)
(72) Erfinder: Laing, Karsten, 71566 Althütte (DE)
(74) Vertreter: Hoeger, Stellrecht & Partner Patentanwälte
(86) Internationale Anmeldenummer: PCT/EP2005/008916
(87) Internationale Veröffentlichungsnummer: WO 2006/021358

(56) Entgegenhaltungen:
- US-B1- 6 263 957
- US-B1- 6 591 898
- PATENT ABSTRACTS OF JAPAN Bd. 1996, Nr. 11, 29. November 1996 (1996-11-29) & JP 08 186388 A (FUJI ELECTRIC CO LTD), 16. Juli 1996 (1996-07-16)

## Beschreibung

Die Erfindung betrifft ein elektrisches Gerät, insbesondere einen Computer, mit einer Energieversorgungsvorrichtung, welche im Betrieb dem elektrischen Gerät die notwendige elektrische Energie bereitstellt, wobei die Energieversorgungsvorrichtung mit einem elektrischen Anschluss für die externe Stromzuführung und mit einem geschlossenen Gehäuse, in welchem eine Schaltungsanordnung angeordnet ist, versehen ist, und mit einer CPU oder einem Graphikprozessor.

Eine Energieversorgungsvorrichtung (power supply) für ein elektrisches Gerät dient dazu, extern bereitgestellte elektrische Energie, wie beispielsweise Netzstrom, derart zu wandeln, dass die elektrische Energie durch elektronische Komponenten des elektrischen Geräts genutzt werden kann.

Energieversorgungsvorrichtungen für Computer weisen üblicherweise eine Lüftereinrichtung auf, um elektronische Leistungsbauteile/Kühlkörper über einen Luftstrom kühlen zu können.

Aus der JP 08186388 A ist eine Kühlungsvorrichtung bekannt, welche eine Wärmesenke umfasst, auf welcher eine Energieversorgungsvorrichtung angeordnet ist. Ein Ventilator bläst einen Luftstrom über die Wärmesenke. Eine Kühlröhre für ein flüssiges Kühlmittel ist ebenfalls an der Wärmesenke angeordnet.

Aus der US 6,263,957 B1 ist ein Kühlungsgerät bekannt, welches eine Platte aufweist, die an einer elektronischen Komponente abstützbar und an diese koppelbar ist. Ein Zirkulationsrohr hat einen Wärmeaufnahmebereich und hat hat eine Wärmeabgabebereich innerhalb eines Fussabdrucks an der Platte. Eine Pumpe ist durch die Platte abgestützt.

Der Erfindung liegt die Aufgabe zugrunde, ein elektrisches Gerät mit einer Energieversorgungsvorrichtung der eingangs genannten Art bereitzustellen, bei dem die Energieversorgungsvorrichtung universell einsetzbar ist.

Diese Aufgabe wird erfindungsgemäß mit den Merkmalen gemäss Anspruch 1 gelöst.

Komponenten eines elektrischen Geräts, die sich im Betrieb stark aufheizen, lassen sich auf effektive Weise flüssigkeitskühlen. Eine Vorrichtung zur lokalen Kühlung mittels einer Flüssigkeit ist beispielsweise in der EP 1 398 511 A1 bzw. US 2004/0119371 A1 beschrieben.

Eine weitere Flüssigkeitskühlungsvorrichtung ist in der WO 03/098415 A1 beschrieben.

Erfindungsgemäß wird der Radiator einer Flüssigkeitskühlungseinrichtung in die Energieversorgungsvorrichtung integriert. In einem Radiator einer Flüssigkeitskühlungseinrichtung wird insbesondere über Vergrößerung der Fläche der Strömungsführung für einen Wärmetausch mit der Umgebung gesorgt, um aufgeheizte Kühlungsflüssigkeit wieder abkühlen zu können. Üblicherweise ist einem Radiator ein Lüfter zugeordnet, um den Radiator mit einem Luftstrom beaufschlagen zu können. Bei der erfindungsgemäßen Lösung ist eine Lüftereinrichtung vorgesehen, deren Luftstrom die für die elektrische Wandlung be züglich der Energieversorgungsfunktion notwendigen, sich aufheizenden Komponenten abkühlen kann und Kühlungsflüssigkeit im Radiator abkühlen kann. Die Anzahl der Baukomponenten lässt sich dadurch verringern. Da ein Lüfter größer ausgebildet werden kann, lässt sich pro Lüfter auch das Lüftergeräusch minimieren.

Da bei der erfindungsgemäßen Lösung nur noch eine Lüftereinrichtung vorgesehen werden muß, läßt sich insgesamt die Geräuschemission des elektrischen Geräts reduzieren.

Erfindungsgemäß läßt sich eine Energieversorgungsvorrichtung-Flüssigkeitskühlungseinrichtung-Kombination bereitstellen, welche auf einfache Weise an bzw. in dem elektrischen Gerät montierbar ist und auf einfache Weise anschließbar ist.

Dadurch, daß der Radiator in die Energieversorgungsvorrichtung integriert ist, läßt sich dieser auch geschützt insbesondere in einem Gehäuse der Energieversorgungsvorrichtung anordnen. Üblicherweise weisen Energieversorgungsvorrichtungen ein geschlossenes Gehäuse und insbesondere Stahlgehäuse auf. (Das Gehäuse weist Öffnungen auf, um eine Luftzirkulation zu ermöglichen.) Radiatoren sind mechanisch relativ empfindlich. Durch die Anordnung in dem Gehäuse der Energieversorgungsvorrichtung lassen sich diese gegenüber mechanischen Einflüssen schützen. Dies gilt insbesondere auch für die Montage einer Flüssigkeitskühlungseinrichtung an einem elektrischen Gerät. Dadurch wiederum ist die Gefahr der Leckage beispielsweise aufgrund Beschädigungen während der Montage beseitigt.

Es ist auch möglich, über den Radiator Teile einer Schaltungsanordnung der Energieversorgungsvorrichtung zu kühlen. Die Schaltungsanordnung dient dazu, elektrische Energie in eine Form zu wandeln, welche durch interne Verbraucher des elektrischen Geräts nutzbar ist. Durch entsprechende Anordnung des Radiators in Relation zu einer solchen Schaltungsanordnung läßt sich diese in Bereichen flüssigkeitskühlen, wobei die in dem Radiator über die Lüftereinrichtung abgekühlte Kühlungsflüssigkeit verwendet wird. Eine solche Flüssigkeitskühlung von Schaltungskomponenten der Energieversorgungsvorrichtung lässt sich ohne großen konstruktiven Aufwand erreichen.

Der Radiator ist so angeordnet, dass er mindestens teilweise durch einen Luftstrom der Lüftereinrichtung beaufschlagbar ist. Es lässt sich dadurch eine effektive Kühlung sowohl der relevanten Komponenten der Energieversorgungsvorrichtung (bezüglich der elektrischen Wandlungsfunktion) als auch der Kühlungsflüssigkeit erreichen.

Es ist eine Umwälzpumpe für die Flüssigkeitskühlung vorgesehen und in die Energieversorgungsvorrichtung integriert. Es lässt sich dadurch ein Modul bereitstellen, welches die notwendigen Komponenten für die Flüssigkeitskühlung enthält; dadurch lässt sich die Flüssigkeitskühlungseinrichtung auf einfache Weise an dem elektrischen Gerät montieren und auch einsetzen.

Die Umwälzpumpe ist an einem Gehäuse der Energieversorgungsvorrichtung angeordnet. Es lässt sich dann ein Energieversorgungs-Flüssigkeitskühlungs-Modul bereitstellen, wobei die Umwälzpumpe bereits positioniert ist. Das Gehäuse der Energieversorgungsvorrichtung stellt einen geeigneten Montageort für die Umwälzpumpe bereit.

Insbesondere ist die Umwälzpumpe außerhalb eines Gehäuseinnenraums eines Gehäuses der Energieversorgungsvorrichtung angeordnet. Die Umwälzpumpe lässt sich dann auf einfache Weise bezüglich der Energieversorgungsvorrichtung montieren. Wenn Wartungsarbeiten an der Umwälzpumpe durchgeführt werden müssen bzw. die Umwälzpumpe ausgetauscht werden muss, dann lässt sich dies auf einfache Weise durchführen.

Ganz besonders vorteilhaft ist es, wenn die Umwälzpumpe mit mindestens einem thermischen Kontaktelement verbunden ist. Das thermische Kontaktelement, welches mit der Umwälzpumpe insbesondere über flexible schlauchförmige Flüssigkeitsleitungen verbunden ist, kann dann an einem oder mehreren relevanten Gegenständen des elektrischen Geräts in thermischem Kontakt fixiert werden. Beispielsweise kann es an der CPU eines Computers und einem Graphikprozessor positioniert werden, um für deren Kühlung zu sorgen.

Mindestens ein thermisches Kontaktelement ist über Flüssigkeitsleitungen mit der Umwälzpumpe derart verbunden, dass durch das mindestens eine thermische Kontaktelement ein Gegenstand thermisch kontaktierbar ist. Flüssigkeitsleitungen, an denen das (mindestens eine) thermische Kontaktelement angeordnet ist, sind von der Energieversorgungsvorrichtung mit integrierter Umwälzpumpe herausgeführt. Die Energieversorgungsvorrichtung wird beispielsweise in dem Gehäuse des elektrischen Geräts montiert. Das thermische Kontaktelement wird dann an dem Gegenstand wie einer CPU oder einem Graphikprozessor positioniert und dort fixiert. Die Gesamtmontage ist stark vereinfacht, da die einzelnen Komponenten der Flüssigkeitskühlungseinrichtung nicht getrennt in dem Gehäuse des elektrischen Geräts montiert werden müssen.

Es gibt grundsätzlich zwei Möglichkeiten, die Umwälzpumpe und den Radiator in einer Strömungsführung relativ zueinander anzuordnen. Bezogen auf die Strömungsrichtung von aufgeheizter Kühlungsflüssigkeit, das heißt in der Strömungsrichtung von Kühlungsflüssigkeit, welche von einem thermischen Kontaktelement abströmt, kann der Radiator vor der Umwälzpumpe angeordnet sein oder nach der Umwälzpumpe. Günstig ist es, wenn in der Strömungsführung für Kühlungsflüssigkeit bezogen auf eine Strömungsrichtung für aufgeheizte Kühlungsflüssigkeit die Umwälzpumpe vor dem Radiator angeordnet ist, das heißt die Umwälzpumpe auf das thermische Kontaktelement folgt. Die Umwälzpumpe wird dann von aufgeheizter Kühlungsflüssigkeit durchströmt, die nachfolgend in dem Radiator abgekühlt wird. Abgekühlte Kühlungsflüssigkeit wird dann von dem Radiator direkt einem thermischen Kontaktelement zugeführt. Eine solche Strömungsführung ist energetisch günstig.

Es ist insbesondere vorgesehen, daß die Umwälzpumpe an oder in der Nähe einer Durchtrittsführung für einen Kabelstrang angeordnet ist. Ein Kabelstrang muß über einen Durchtritt durch ein Gehäuse einer Energieversorgungsvorrichtung geführt werden. Der Kabelstrang enthält die Kabel, über die interne elektrische Verbraucher des elektrischen Geräts mit Strom versorgt werden. Der aus der Energieversorgungsvorrichtung austretende Kabelstrang benötigt Raum. Deshalb muß ein bestimmter Raum hinter der Energieversorgungsvorrichtung für den Kabelstrang freigehalten werden. Wenn die Umwälzpumpe (und gegebenenfalls auch ein Ausgleichsbehälter) an oder in der Nähe zur Durchführung angeordnet sind, dann kann dieser sowieso freizuhaltende Raum effektiv genutzt werden. Der effektive Raumbedarf der Energieversorgungsvorrichtung mit integrierter Flüssigkeitskühlungseinrichtung erhöht sich dadurch nicht oder nur wenig. Dies wiederum ermöglicht es, die erfindungsgemäße Energieversorgungsvorrichtung in normierte Gehäuse einzusetzen. Insbesondere ist die Umwälzpumpe an einer Halteplatte angeordnet, welche einem elektrischen Anschluß gegenüberliegt. Über den elektrischen Anschluß wird elektrische Energie von außen in die Energieversorgungsvorrichtung eingekoppelt. Üblicherweise ist der elektrische Anschluß ein Netzanschluß. Wenn die Umwälzpumpe an einer gegenüberliegenden Halteplatte angeordnet ist, dann muß die Energieversorgungsvorrichtung als solche zur Integration einer Flüssigkeitskühlungseinrichtung nur minimal modifiziert werden; an der Halteplatte ist üblicherweise ein Durchtritt für einen Kabelstrang angeordnet. Hinter dem Kabelstrang muß sowieso Platz gehalten werden, um diesen herausführen zu können. Wenn dann die Umwälzpumpe an der Halteplatte angeordnet wird, dann kann dieser Platz in einem Gehäuse eines elektrischen Geräts zur Aufnahme der Umwälzpumpe genutzt werden.

Ganz besonders vorteilhaft ist es, wenn der Radiator und die Lüftereinrichtung hintereinander angeordnet sind, wobei der Radiator bezüglich einer Ansaugseite vor oder hinter der Lüftereinrichtung angeordnet sein kann. Durch die Hintereinanderanordnung von Radiator und Lüftereinrichtung ist gewährleistet, daß der Radiator über den Luftstrom der Lüftereinrichtung kühlbar ist.

Insbesondere ist es günstig, wenn der Radiator unterhalb eines elektrischen Anschlusses der Energieversorgungsvorrichtung angeordnet ist. Dadurch läßt sich eine Luftzirkulation durch einen Innenraum der Energieversorgungsvorrichtung gewährleisten. Üblicherweise sind Öffnungen und insbesondere Lüftungsschlitze einer Energieversorgungsvorrichtung neben dem elektrischen Anschluß angeordnet. Wenn der Radiator unterhalb des elektrischen Anschlusses liegt, dann sind solche Lüftungsschlitze nicht vollständig bedeckt.

Es kann vorgesehen sein, daß eine Rotationsachse der Lüftereinrichtung quer zu einer Rotationsachse der Umwälzpumpe orientiert ist. Dadurch läßt sich eine platzsparende Integration der Flüssigkeitskühlungseinrichtung in die Energieversorgungsvorrichtung realisieren.

Günstig ist es, wenn die Umwälzpumpe einen Elektromotor mit einem sphärisch gelagerten Rotor aufweist. Solche Umwälzpumpen sind in der EP 1 416 607 A2 bzw. US 2004/0119371 A1 und der EP 1 398 511 A1 bzw. US 2004/0052663 A1 beschrieben, auf die ausdrücklich Bezug genommen wird. Solche Elektromotoren und damit die Umwälzpumpen, in welche solche Elektromotoren integriert sind, lassen sich mit geringer Höhe ausbilden. Ferner weisen die entsprechenden Elektromotoren eine hohe Laufruhe auf, so daß die Geräuschemission reduziert ist. Ferner weisen entsprechende Elektromotoren eine hohe Lebensdauer auf.

Insbesondere ist ein Schaufelrad der Umwälzpumpe mit dem Rotor verbunden, welcher das Schaufelrad entsprechend antreibt.

Es ist günstig, wenn mindestens ein Ausgleichsbehälter für Kühlungsflüssigkeit vorgesehen ist. Es ergibt sich dadurch die Möglichkeit, die Flüssigkeitskühlungseinrichtung mit einer größeren Menge an Kühlungsflüssigkeit zu befüllen, als für den aktuellen Betrieb notwendig ist. Es kann dadurch ein normaler Kühlungsflüssigkeitsschwund beispielsweise durch Diffusion und Verdunstung ausgeglichen werden, so daß bei genügender Vorbefüllung eine Nachbefüllung während der Lebensdauer der Flüssigkeitskühlungseinrichtung nicht notwendig ist.

Insbesondere ist der mindestens eine Ausgleichsbehälter in die Energieversorgungsvorrichtung integriert. Es ist dadurch ein Gesamtsystem bereitgestellt, welches die notwendigen Komponenten für die Flüssigkeitskühlung enthält.

Es kann vorgesehen sein, daß der mindestens eine Ausgleichsbehälter neben einer Umwälzpumpe angeordnet ist. Beispielsweise kann dadurch der Raum hinter einem Durchtritt für einen Kabelstrang genutzt werden.

Es kann auch vorgesehen sein, daß der mindestens eine Ausgleichsbehälter in die Umwälzpumpe integriert ist, das heißt insbesondere innerhalb eines Gehäuses der Umwälzpumpe angeordnet ist.

Ganz besonders vorteilhaft ist es, wenn in die Energieversorgungsvorrichtung Komponenten für eine Flüssigkeitskühleinrichtung integriert sind. Es läßt sich dadurch eine Energieversorgungs-Flüssigkeitskühlungs-Kombination ausbilden, welche auf einfache Weise beispielsweise an oder in einem Gehäuse eines elektrischen Geräts montierbar ist. Auch die Anbindung an einen zu kühlenden Gegenstand oder an mehrere zu kühlende Gegenstände innerhalb des Gehäuses läßt sich auf einfache Weise erreichen.

Insbesondere ist eine Energieversorgungsvorrichtung bereitgestellt, in welche die Komponenten Radiator, Umwälzpumpe, Ausdehnungsbehälter und Lüftungseinrichtung für den Radiator einer Flüssigkeitskühlungseinrichtung integriert sind.

Es ist ferner günstig, wenn ausgehende Flüssigkeitsleitungen vorhanden sind, an welchen mindestens ein thermisches Kontaktelement angeordnet ist. Die Flüssigkeitsleitungen sind insbesondere flexibel als Schläuche ausgebildet. Es lassen sich dann ein oder mehrere thermische Kontaktelemente bezüglich einem oder mehreren zu kühlenden Gegenständen positionieren.

Es ist besonders vorteilhaft, wenn die Flüssigkeitskühlungseinrichtung mit einer solchen Menge an Kühlungsflüssigkeit vorbefüllt ist, daß kein Nachfüllen für eine erwartete Lebensdauer notwendig ist. Die Flüssigkeitskühlungseinrichtung enthält als vorkonfektioniertes System diejenige Menge an Kühlungsflüssigkeit (beispielsweise ein Wasser-Gefrierschutz-Gemisch), so daß Kühlungsflüssigkeitsverluste beispielsweise durch Diffusion und Verdunstung ausgleichbar sind.

Die nachfolgende Beschreibung einer bevorzugten Ausführungsform dient im Zusammenhang mit der Zeichnung der näheren Erläuterung der Erfindung. Es zeigen:
- Figur 1: eine seitliche Schnittansicht eines Ausführungsbeispiels einer elektrischen Energieversorgungsvorrichtung;
- Figur 2: eine Ansicht der Energieversorgungsvorrichtung gemäß Figur 1 in der Richtung A ohne Lüftereinrichtung;
- Figur 3: die gleiche Ansicht wie in Figur 2 mit Lüftereinrichtung (ohne Flüssigkeitsleitungen);

- Figur 4: eine Außendraufsicht auf die Energieversorgungsvorrichtung gemäß Figur 1 in der Richtung B und
- Figur 5: eine Außendraufsicht der Energieversorgungsvorrichtung gemäß Figur 1 in der Richtung C (Gegenrichtung zu Richtung B).

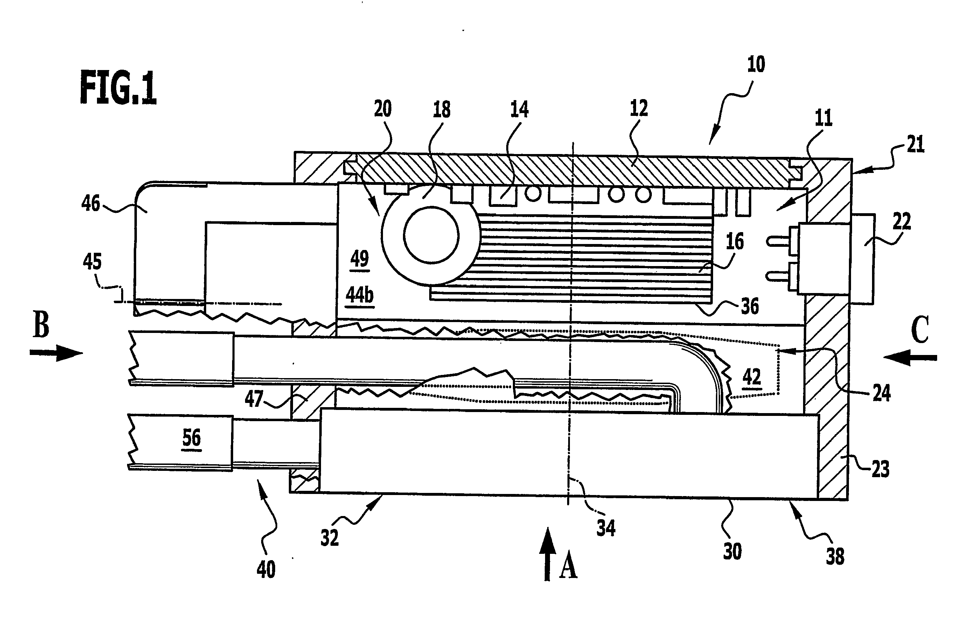

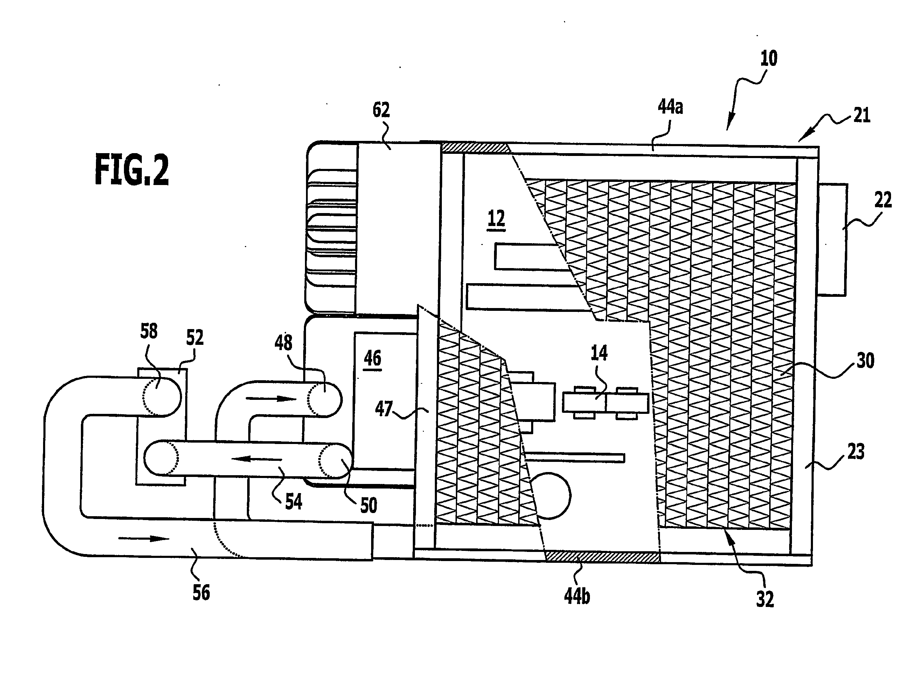

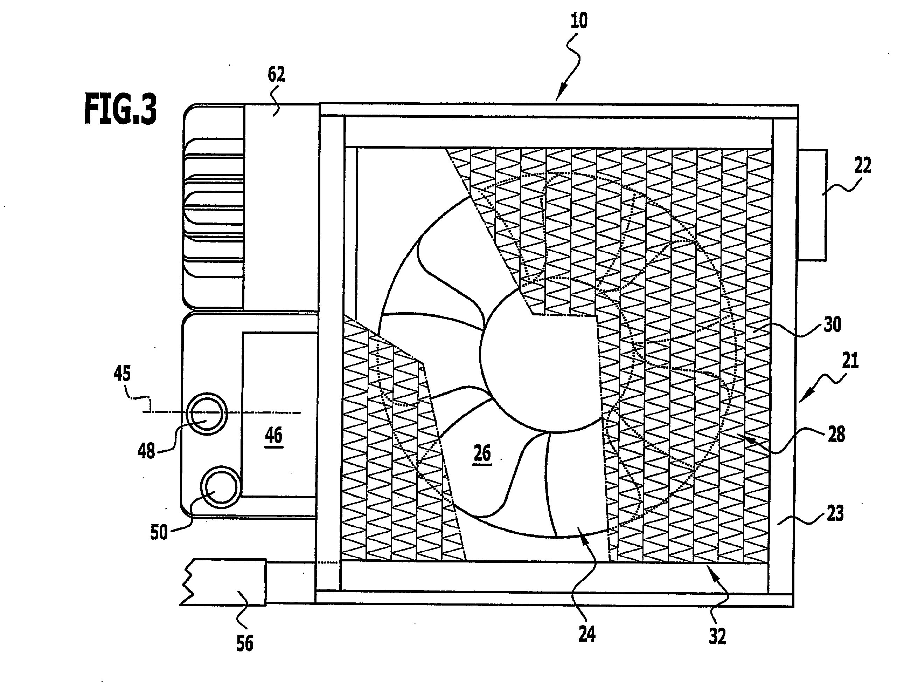

Ein erstes Ausführungsbeispiel einer elektrischen Energieversorgungsvorrichtung (power supply), welche in den Figuren 1 bis 5 gezeigt und dort mit 10 bezeichnet ist, umfaßt einen Träger 12 für funktionelle Komponenten 14 der Energieversorgungsvorrichtung. Insbesondere sind an dem Träger 12 elektronische Bauteile als funktionelle Komponenten 14 angeordnet. An dem Träger 12 kann auch ein Kühlkörper 16 angeordnet sein. Dieser Kühlkörper 16, welcher eine Mehrzahl von Kühlrippen aufweist, steht in thermischem Kontakt mit einem oder mehreren elektronischen Leistungsbauteilen 18 einer auf dem Träger 12 angeordneten Schaltungsanordnung 20.

Der Träger 12 ist in einem geschlossenen Gehäuse 21 angeordnet. Bei diesem handelt es sich insbesondere um ein Stahlgehäuse.

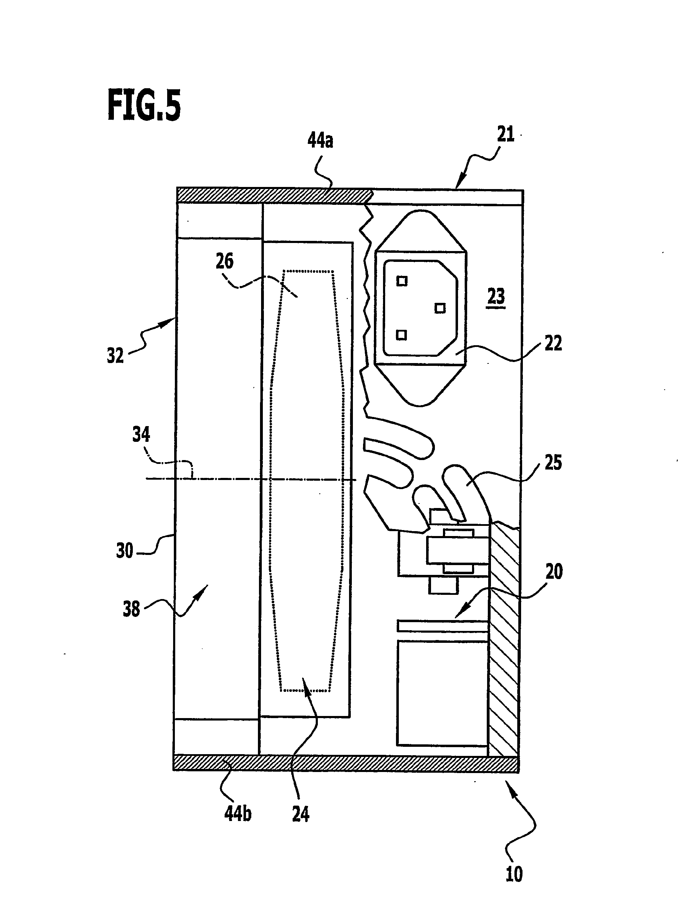

Die elektrische Energieversorgungsvorrichtung 10 weist einen elektrischen Anschluß 22 für die externe Stromzuführung auf, bei dem es sich insbesondere um einen Netzanschluß handelt. Dieser ist an einer Rückenplatte 23 des Gehäuses 21 angeordnet. Die Rückenplatte 23 ist mit Öffnungen 25 versehen (Figur 5), welche neben dem elektrischen Anschluß 22 angeordnet sind. Über den elektrischen Anschuß 22 läßt sich elektrische Energie in die Energieversorgungsvorrichtung 10 einkoppeln, wobei die Energieversorgungsvorrichtung 10 mit ihrer Schaltungsanordnung 20 für eine elektrische Wandlung sorgt, so daß elektrische Energie elektronischen Komponenten eines elektrischen Gerätes, wie beispielsweise einem Computer und insbesondere PC in der erforderlichen Form bereitstellbar ist.

Die Energieversorgungsvorrichtung 10 umfaßt eine Lüftereinrichtung 24 mit einem rotierend angetriebenen Lüfterrad 26 eines Lüfters 28. Vor dem Lüfterrad 26 ist ein Schutzgitter 30 angeordnet.

Die Energieversorgungsvorrichtung 10 weist eine Ansaugseite 32 auf, welche (abgedeckt mit dem Schutzgitter 30) mindestens teilweise offen ist, so daß über den Lüfter 28 ein Kühlungs-Luftstrom erzeugbar ist. Die Ansaugseite 32 liegt quer und insbesondere senkrecht zur Rückenplatte 23. Der Lüfter 28 ist so angeordnet, daß über den Luftstrom insbesondere der Kühlkörper 16 kühlbar ist. Beispielsweise ist der Luftstrom auch so gerichtet, daß er mindestens teilweise auch Leistungsbauteile 18 direkt beaufschlägt.

Bei dem gezeigten Ausführungsbeispiel ist eine Rotationsachse 34 des Lüfterrads 26 quer und insbesondere senkrecht auf eine Seitenfläche 36 des Kühlkörpers 16 ausgerichtet. Weiterhin ist die Rotationsachse 34 quer und insbesondere senkrecht zu dem Träger 12 für die Schaltungsanordnung 20 ausgerichtet. Ferner ist die Rotationsachse 34 insbesondere parallel zu der Rückenplatte 23 orientiert.

Bei der Positionierung der Energieversorgungsvorrichtung 10 in einem Gehäuse des entsprechenden elektrischen Geräts, für dessen Energieversorgung die Vorrichtung 10 verantwortlich ist, weist die Ansaugseite 32 vorzugsweise nach unten ins Gehäuseinnere, d.h. bei montierter Energieversorgungsvorrichtung 10 liegt die Lüftereinrichtung 24 bezogen auf die Schwerkraftrichtung unterhalb des elektrischen Anschlusses 32. Insbesondere ist das Gehäuse des elektrischen Geräts mit einer Öffnung versehen, an welcher die Rückenplatte 23 der Energieversorgungsvorrichtung 10 positioniert wird. Diese Öffnung liegt üblicherweise an einer Gehäuserückseite des elektrischen Geräts.

Erfindungsgemäß ist es vorgesehen, daß ein Radiator 38 einer Flüssigkeitskühlungseinrichtung 40 in die Energieversorgungsvorrichtung 10 integriert ist.

Insbesondere ist der Radiator 38 so angeordnet, daß er mindestens teilweise durch den Luftstrom der Lüftereinrichtung 24 beaufschlagbar ist, um für eine Kühlung zu sorgen.

Durch die insbesondere als Lüftungsschlitze ausgebildete Öffnungen 25 ist eine Luftzirkulation mit dem Außenraum ermöglicht. Dadurch wird ein Luftstau in dem Gehäuse des elektrischen Geräts vermieden.

Der Radiator 38 weist eine Kühlstrecke 42 auf, durch die (aufgeheizte) Flüssigkeit strömt. In der Kühlstrecke 42 kann sich die Flüssigkeit insbesondere aufgrund der Luftstrombeaufschlagung durch die Lüftereinrichtung 24 abkühlen.

Bei der erfindungsgemäßen Lösung ist eine gemeinsame Lüftereinrichtung, nämlich die Lüftereinrichtung 24 für die Energieversorgungsvorrichtung 10 und für die Flüssigkeitskühlungseinrichtung 40, vorgesehen. Das Lüfterrad 26 läßt sich größer ausbilden; dadurch läßt sich die Geräuschentwicklung der Lüftereinrichtung 24 erniedrigen.

Zum Halten des Radiators 38 (und zum Schließen des Gehäuses 21) umfaßt das Gehäuse 21 der Energieversorgungsvorrichtung 10 beispielsweise gegenüberliegende Halteplatten 44a, 44b. Die Halteplatten 44a, 44b können auch die Lüftereinrichtung 24 und den Träger 12 für die Schaltungsanordnung 20 halten.

Bei der Energieversorgungsvorrichtung 10 sind der Radiator 38 und die Lüftereinrichtung 24 hintereinander angeordnet, so daß der Luftstrom der Lüftereinrichtung 24 an der Kühlstrecke 42 vorbeiströmt. Bezogen auf das Schutzgitter 30 kann die Lüftereinrichtung 24 vor oder hinter dem Radiator 38 angeordnet sein. Der Radiator 38 ist mechanisch geschützt in dem Gehäuse 21 angeordnet.

Es kann beispielsweise vorgesehen sein, daß der Radiator 38 nur einen Teilbereich der Strömungsfläche der Lüftereinrichtung 24 "bedeckt", so daß über einen anderen Teilbereich der Luftstrom des Lüfters 28 direkt den Kühlkörper 16 beaufschlagen kann.

Es ist erfindungsgemäß vorgesehen, eine Umwälzpumpe 46 der Flüssigkeitskühlungseinrichtung 40 in die Energieversorgungsvorrichtung 10 zu integrieren. Bei der Umwälzpumpe 46 handelt sich beispielsweise um eine Umwälzpumpe mit einem sphärisch gelagerten Rotor, an welchem drehfest ein Schaufelrad sitzt. Eine solche Umwälzpumpe ist beispielsweise in der EP 1 398 511 A1 bzw. der US 2004/0052663 A1 oder der EP 1 416 607 A2 bzw. der US 2004/0119371 A1 beschrieben. Auf diese Druckschriften wird ausdrücklich Bezug genommen.

Eine Rotationsachse 45 des Rotors der Umwälzpumpe liegt quer und insbesondere senkrecht zur Rotationsachse 34 des Lüfterrads 26.

Die Energieversorgungsvorrichtung 10 bildet ein Flüssigkeitskühlungs-Energieversorgungsvorrichtungs-Modul, welches in ein Gehäuse des entsprechenden elektrischen Geräts (beispielsweise eines Computers) einsetzbar ist.

Die Umwälzpumpe 46 ist insbesondere an einer Halteplatte 47, welche der Rückenplatte 23 gegenüberliegt und zwischen den Halteplatten 44a, 44b sitzt, fixiert. Insbesondere ist sie außerhalb eines Gehäuseinnenraums 49 des Gehäuses 21 angeordnet.

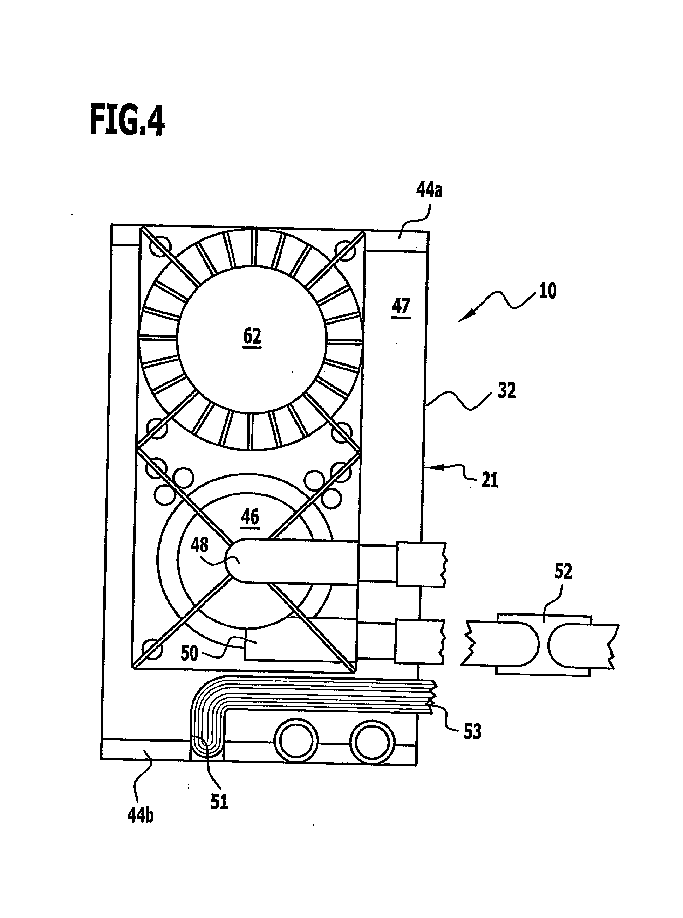

An der Halteplatte 47 sitzt eine Durchführung 51 für einen oder mehrere Kabelstränge 53 (Figur 4). Über diesen Kabelstrang 53 (bzw. Kabelstränge 53) wird elektrischen Verbrauchern des elektrischen Geräts Strom zugeführt.

Die Umwälzpumpe 46 wird über die elektrische Energieversorgungsvorrichtung 10 mit elektrischer Energie versorgt. Sie ist dazu an entsprechende Ausgangsanschlüsse der Schaltungsanordnung 20 beispielsweise mittels Kabel des Kabelstrangs 53 elektrisch angeschlossen.

Die Umwälzpumpe 46 weist einen ersten Flüssigkeitsanschluß 48 und einen zweiten Flüssigkeitsanschluß 50 auf. Mit diesen beiden Anschlüssen 48, 50 steht (mindestens) ein thermisches Kontaktelement 52 in fluidwirksamer Verbindung, welches an einem oder mehreren elektronischen Leistungsbauteilen des elektrischen Geräts fixierbar ist, um Wärme abführen zu können. Beispielsweise ist es vorgesehen, das thermische Kontaktelement 52 an der CPU eines Computers in thermischem Kontakt mit dieser zu fixieren. Es kann alternativ oder zusätzlich auch vorgesehen sein, das thermische Kontaktelement 52 oder ein weiteres thermisches Kontaktelement mit einem Graphikprozessor eines Computers zu verbinden.

Das thermische Kontaktelement 52 dient dazu, den thermischen Kontakt mit einer Wärmequelle (heat sink) bereitzustellen. Das thermische Kontaktelement 52 wird von Kühlungsflüssigkeit durchströmt, um Wärme von dem thermischen Kontaktelement 52 und damit von der Wärmequelle abführen zu können.

Das thermische Kontaktelement 52 ist mit dem zweiten Flüssigkeitsanschluß 50 der Umwälzpumpe 46 über eine erste Flüssigkeitsleitung 54 verbunden. Bei dieser handelt es sich insbesondere um einen (flexiblen) Schlauch.

Das thermische Kontaktelement 52 ist ferner über eine zweite Flüssigkeitsleitung 56 mit dem ersten Flüssigkeitsanschluß 48 der Umwälzpumpe 46 verbunden.

Zwischen einem entsprechenden Anschluß 58 des thermischen Kontaktelements 52 und dem ersten Flüssigkeitsanschluß 48 der Umwälzpumpe 46 ist der Radiator 38 angeordnet; aufgeheizte Kühlungsflüssigkeit, welche vom thermischen Kontaktelement 52 kommt, läßt sich in dem Radiator 38 mit seiner flächigen Kühlstrecke 42 abkühlen, so daß abgekühlte Kühlungsflüssigkeit der Umwälzpumpe 46 über den Flüssigkeitsanschluß 48 zuführbar ist.

Es ist auch möglich, daß der Anschluß 58 des thermischen Kontaktelements 52 mit der Umwälzpumpe 46 über den Anschluß 48 verbunden ist. Der Anschluß 50 ist dann mit dem Radiator 38 verbunden. In der Strömungsführung der Kühlungsflüssigkeit ist die Umwälzpumpe 46 dann direkt nach dem thermischen Kontaktelement 52 und vor dem Radiator 38 angeordnet. Die Umwälzpumpe 46 wird dadurch von aufgeheizter Kühlungsflüssigkeit vor dem Abkühlen im Radiator 38 durchströmt.

Die Umwälzpumpe kann auch mehrere thermische Kontaktelemente mit Kühlungsflüssigkeit versorgen bzw. es sind mehrere Umwälzpumpen vorgesehen.

Die Flüssigkeitskühlungseinrichtung 40 umfaßt einen Ausgleichsbehälter 62 für Kühlungsflüssigkeit. Es kann sich dabei um einen getrennten Behälter handeln, wie in den Figuren gezeigt, oder der Ausgleichsbehälter kann in die Umwälzpumpe 46 integriert sein.

Der Ausdehnungsbehälter 62 weist beispielsweise ein Aufnahmevolumen in der Größenordnung von 50 cm³ auf. Er ist insbesondere neben der Umwälzpumpe 46 an der Halteplatte 47 angeordnet.

Die Flüssigkeitskühlungseinrichtung 40 wird vorzugsweise mit der erforderlichen Menge an Kühlungsflüssigkeit vorbefüllt, welche für die erwartete übliche Lebensdauer ausreicht, so daß keine Nachbefüllung notwendig ist. Der Ausgleichsbehälter 62 stellt den zusätzlichen Aufnahmeraum für die Kühlungsflüssigkeit hierzu bereit.

Es wird eine vorkonfektionierte Flüssigkeitskühlungseinrichtung 40 bereitgestellt, welche in die Energieversorgungsvorrichtung 10 integriert ist; es ist dadurch ein vorkonfektioniertes Flüssigkeitskühlungs-Energieversorgungs-Modul gebildet, welches als Ganzes in ein Gehäuse eines elektrischen Gerätes einsetzbar ist. Das oder die thermischen Kontaktelemente 52 werden dann mit den zu kühlenden Gegenständen des elektrischen Gerätes, insbesondere mit elektronischen Leistungsbauteilen, in thermischen Kontakt gebracht, das heißt bezüglich diesen mechanisch derart fixiert, daß ein guter thermischer Kontakt vorliegt.

Im Betrieb der Energieversorgungsvorrichtung 10 stellt diese dem elektrischen Gerät die notwendige elektrische Energie bereit. Ferner wird die Umwälzpumpe 46 angetrieben, um Kühlungsflüssigkeit durch das bzw. die thermischen Kontaktelemente 52 zu pumpen. Dadurch läßt sich von dem entsprechenden, mit einem thermischen Kontaktelement 52 kontaktierten Gegenstand Wärme abführen. Die aufgeheizte Kühlungsflüssigkeit wird dann dem Radiator 38 zugeführt, an welcher sie abkühlen kann. Ein Luftstrom der Lüftereinrichtung 24 beaufschlagt dabei den Radiator 38 und vorzugsweise auch mindestens teilweise die Schaltungsanordnung 20 der Energieversorgungsvorrichtung 10. Die Lüftereinrichtung 24 sorgt dabei gleichzeitig für eine Luftkühlung der aufgeheizten Kühlungsflüssigkeit und für eine Luftkühlung der Schaltungsanordnung 20.

Es ist dabei möglich, daß der Radiator 38 so angeordnet ist, daß abgekühlte Kühlungsflüssigkeit an der Schaltungsanordnung 20 vorbeigeführt wird, um diese - über Kühlungsflüssigkeit - zusätzlich kühlen zu können.

Die Lüftereinrichtung 24 ist eine gemeinsame Lüftereinrichtung für den Radiator 38 und die Energieversorgungsvorrichtung 10 und insbesondere deren Schaltungsanordnung 20.

Durch die Kombination der Flüssigkeitskühlungseinrichtung 40 und der Energieversorgungsvorrichtung 10 mit integriertem Radiator 38 kann eine weitere Lüftereinrichtung entfallen. Es wird ein kompaktes Modul bereitgestellt, welches sich auf einfache Weise in einem Gehäuse eines elektrischen Geräts montieren läßt. Der Lüfter 28 für den Radiator 38 läßt sich vergrößern und damit läßt sich das Lüftergeräusch verringern.

Der Radiator 38 ist in dem Gehäuse 21 geschützt angeordnet.

Das Kühlungsflüssigkeits-Energieversorgungs-Modul ist vorzugsweise vorkonfektioniert, das heißt alle notwendigen Komponenten der Flüssigkeitskühlungseinrichtung 40 sind montiert; insbesondere sind der Radiator 38, die Umwälzpumpe 46, die Lüftereinrichtung 24, die Flüssigkeitsleitungen 54, 56 und darüber das oder die thermischen Kontaktelemente 52 montiert. Ferner ist das System mit einer ausreichende Menge an Kühlungsflüssigkeit vorgefüllt, so daß keine Nachbefüllung während der üblichen erwarteten Lebensdauer des Moduls notwendig ist.

## Patentansprüche

1. Elektrisches Gerät, insbesondere ein Computer, mit einer Energieversorgungsvorrichtung (10), welche im Betrieb dem elektrischen Gerät die notwendige elektrische Energie bereitstellt, wobei die Energieversorgungsvorrichtung (10) mit einem elektrischen Anschluss (22) für die externe Stromzuführung und mit einem geschlossenen Gehäuse (21), in welchem eine Schaltungsanordnung (20) angeordnet ist, versehen ist, und mit einer CPU oder einem Graphikprozessor, wobei die Energieversorgungsvorrichtung (10) eine Lüftereinrichtung (24) für die Schaltungsanordnung (20) umfasst, ein Radiator (38) für eine Flüssigkeitskühlungseinrichtung (40) in die Energieversorgungsvorrichtung (10) integriert und in dem Gehäuse (21) angeordnet ist, wobei der Radiator (38) so angeordnet ist, dass er mindestens teilweise durch einen Luftstrom der Lüftereinrichtung (24) beaufschlagbar ist und die Lüftereinrichtung (24) gleichzeitig für eine Luftkühlung von aufgeheizter Kühlflüssigkeit und der Schaltungsanordnung (20) sorgt, eine Umwälzpumpe (46) für die Flüssigkeitskühlung an dem Gehäuse (21) der Energieversorgungsvorrichtung (10) angeordnet ist, und die Umwälzpumpe (46) über die Energieversorgungsvorrichtung (10) mit elektrischer Energie versorgt ist, und wobei mindestens ein thermisches Kontaktelement (52) mit der Umwälzpumpe (46) über Flüssigkeitsleitungen (54, 56) verbunden ist, wobei durch das mindestens eine thermische Kontaktelement (52) die CPU oder der Graphikprozessor thermisch kontaktiert ist.

2. Elektrisches Gerät nach Anspruch 1, **dadurch gekennzeichnet, dass** die Umwälzpumpe (46) außerhalb eines Gehäuseinnenraums (49) des Gehäuses (21) der Energieversorgungsvorrichtung (10) angeordnet ist.

3. Elektrisches Gerät nach einem der vorangehenden Ansprüche, **dadurch gekennzeichnet, dass** in der Strömungsführung für Kühlungsflüssigkeit bezogen auf eine Strömungsrichtung für aufgeheizte Kühlungsflüssigkeit die Umwälzpumpe (46) vor dem Radiator (38) angeordnet ist.

4. Elektrisches Gerät nach einem der vorangehenden Ansprüche, **dadurch gekennzeichnet, dass** die Umwälzpumpe (46) an oder in der Nähe einer Durchführung (51) für einen Kabelstrang (53) angeordnet ist.

5. Elektrisches Gerät nach einem der vorangehenden Ansprüche, **dadurch gekennzeichnet, dass** die Umwälzpumpe (46) an einer Halteplatte (47) angeordnet ist, welche dem elektrischen Anschluss (22) gegenüberliegt.

6. Elektrisches Gerät nach einem der vorangehenden Ansprüche, **dadurch gekennzeichnet, dass** eine Rotationsachse (34) der Lüftereinrichtung quer zu einer Rotationsachse (45) der Umwälzpumpe (46) orientiert ist.

7. Elektrisches Gerät nach einem der vorangehenden Ansprüche, **dadurch gekennzeichnet, dass** der Radiator (38) und die Lüftereinrichtung (24) hintereinander angeordnet sind.

8. Elektrisches Gerät nach einem der vorangehenden Ansprüche, **dadurch gekennzeichnet, dass** der Radiator (38) unterhalb des elektrischen Anschlusses (22) der Energieversorgungsvorrichtung (10) angeordnet ist.

9. Elektrisches Gerät nach einem der vorangehenden Ansprüche, **dadurch gekennzeichnet, dass** die Umwälzpumpe (46) einen Elektromotor mit einem sphärisch gelagerten Rotor aufweist.

10. Elektrisches Gerät nach Anspruch 9, **dadurch gekennzeichnet, dass** ein Schaufelrad der Umwälzpumpe (46) mit dem Rotor verbunden ist.

11. Elektrisches Gerät nach einem der vorangehenden Ansprüche, **dadurch gekennzeichnet, dass** mindestens ein Ausgleichsbehälter (62) für Kühlungsflüssigkeit vorgesehen ist.

12. Elektrisches Gerät nach Anspruch 11, **dadurch gekennzeichnet, dass** der mindestens eine Ausgleichsbehälter (62) in die Energieversorgungsvorrichtung (10) integriert ist.

13. Elektrisches Gerät nach Anspruch 11 oder 12, **dadurch gekennzeichnet, dass** der mindestens eine Ausgleichsbehälter (62) neben der Umwälzpumpe (46) angeordnet ist.

14. Elektrisches Gerät nach Anspruch 11 oder 12, **dadurch gekennzeichnet, dass** der mindestens eine Ausgleichsbehälter in die Umwälzpumpe integriert ist.

15. Elektrisches Gerät nach einem der vorangehenden Ansprüche, **dadurch gekennzeichnet, dass** in die Energieversorgungsvorrichtung (10) Komponenten (24, 38, 46) für eine Flüssigkeitskühlungseinrichtung (40) integriert sind.

16. Elektrisches Gerät nach einem der vorangehenden Ansprüche, **dadurch gekennzeichnet, dass** die Flüssigkeitskühlungseinrichtung (40) mit einer solchen Menge an Kühlungsflüssigkeit vorbefüllt ist, dass kein Nachfüllen während einer erwarteten Lebensdauer notwendig ist.

## Claims

1. Electrical appliance, in particular, a computer, comprising a power supply unit (10) which makes the necessary electrical power available to the electrical appliance during operation, the power supply unit (10) being provided with an electrical connection (22) for the external supply of current and with a closed housing (21) in which a circuit arrangement (20) is arranged, and comprising a CPU or a graphics processor, the power supply unit (10) comprising a fan device (24) for the circuit arrangement (20), a radiator (38) for a liquid cooling device (40) being integrated into the power supply unit (10) and arranged in the housing (21), the radiator (38) being arranged such that it can be acted upon at least partially by a stream of air from the fan device (24), and the fan device (24) at the same time providing for an air cooling of heated cooling liquid and of the circuit arrangement (20), a circulation pump (46) for the liquid cooling being arranged on the housing (21) of the power supply unit (10), and the circulation pump (46) being supplied with electrical power via the power supply unit (10), at least one thermal contact element (52) being connected to the circulation pump (46) via liquid conduits (54, 56), and the CPU or the graphics processor being thermally contacted by the at least one thermal contact element (52).

2. Electrical appliance in accordance with claim 1, **characterized in that** the circulation pump (46) is arranged outside a housing interior (49) of the housing (21) of the power supply unit (10).

3. Electrical appliance in accordance with any one of the preceding claims, **characterized in that** in the flow guidance for cooling liquid the circulation pump (46) is arranged upstream of the radiator (38) with respect to a direction of flow for heated cooling liquid.

4. Electrical appliance in accordance with any one of the preceding claims, **characterized in that** the circulation pump (46) is arranged at or in the vicinity of a feed-through (51) for a loom of cables (53).

5. Electrical appliance in accordance with any one of the preceding claims, **characterized in that** the circulation pump (46) is arranged on a supporting plate (47) located opposite the electrical connection (22).

6. Electrical appliance in accordance with any one of the preceding claims, **characterized in that** an axis of rotation (34) of the fan device is oriented transversely to an axis of rotation (45) of the circulation pump (46).

7. Electrical appliance in accordance with any one of the preceding claims, **characterized in that** the radiator (38) and the fan device (24) are arranged one behind the other.

8. Electrical appliance in accordance with any one of the preceding claims, **characterized in that** the radiator (38) is arranged beneath the electrical connection (22) of the power supply unit (10).

9. Electrical appliance in accordance with any one of the preceding claims, **characterized in that** the circulation pump (46) has an electric motor with a spherically mounted rotor.

10. Electrical appliance in accordance with claim 9, **characterized in that** an impeller of the circulation pump (46) is connected to the rotor.

11. Electrical appliance in accordance with any one of the preceding claims, **characterized in that** at least one compensation reservoir (62) for cooling liquid is provided.

12. Electrical appliance in accordance with claim 11, **characterized in that** the at least one compensation reservoir (62) is integrated into the power supply unit (10).

13. Electrical appliance in accordance with claim 11 or 12, **characterized in that** the at least one compensation reservoir (62) is arranged next to the circulation pump (46).

14. Electrical appliance in accordance with claim 11 or 12, **characterized in that** the at least one compensation reservoir is integrated into the circulation pump.

15. Electrical appliance in accordance with any one of the preceding claims, **characterized in that** components (24, 38, 46) for a liquid cooling device (40) are integrated into the power supply unit (10).

16. Electrical appliance in accordance with any one of the preceding claims, **characterized in that** the liquid cooling device (40) is prefilled with such an amount of cooling liquid that no subsequent filling is necessary during an expected service life.

## Revendications

1. Appareil électrique, en particulier ordinateur, comprenant un dispositif d'alimentation en énergie (10) qui met à disposition de l'appareil électrique l'énergie électrique nécessaire en fonctionnement, dans lequel le dispositif d'alimentation en énergie (10) est doté d'un raccordement électrique (22) pour l'amenée de courant externe, et d'un boîtier fermé (21) dans lequel est agencé un agencement de circuit (20), et comprenant une unité centrale ou un processeur graphique, dans lequel le dispositif d'alimentation en énergie (10) inclut un système à ventilateur (24) pour l'agencement de circuit (20), un radiateur (38) pour un système de refroidissement à liquide (40) est intégré dans le dispositif d'alimentation d'énergie (10) et est agencé dans le boîtier (21), dans lequel le radiateur (38) est agencé de telle façon qu'il peut être balayé au moins partiellement avec un flux d'air du système à ventilateur (24), et le système à ventilateur (24) assure simultanément un refroidissement à l'air du liquide de refroidissement échauffé et de l'agencement de circuit (20), une pompe de recirculation (46) pour le refroidissement du liquide est agencée sur le boîtier (21) du dispositif d'alimentation d'énergie (10), et la pompe de recirculation (46) est alimentée en énergie électrique via le dispositif d'alimentation en énergie (10), et dans lequel au moins un élément de contact thermique (52) est relié à la pompe de recirculation (46) via des conduites à liquide (54, 56), et l'unité centrale ou le processeur graphique est mis(e) en contact thermique par ledit au moins un élément de contact thermique (52).

2. Appareil électrique selon la revendication 1, **caractérisé en ce que** la pompe de recirculation (46) est agencée à l'extérieur d'un volume intérieur (49) du boîtier (21) du dispositif d'alimentation en énergie (10).

3. Appareil électrique selon l'une des revendications précédentes, **caractérisé en ce que** la pompe de recirculation (46) est agencée devant le radiateur (38) dans le guidage de l'écoulement pour le liquide de refroidissement par référence à une direction d'écoulement pour un liquide de refroidissement échauffé.

4. Appareil électrique selon l'une des revendications précédentes, **caractérisé en ce que** la pompe de recirculation (46) est agencée au niveau ou au voisinage d'une traversée (51) pour un faisceau de câbles (53).

5. Appareil électrique selon l'une des revendications précédentes, **caractérisé en ce que** la pompe de recirculation (46) est agencée sur une plaque de maintien (47) qui est opposée au raccordement électrique (22).

6. Appareil électrique selon l'une des revendications précédentes, **caractérisé en ce qu'**un axe de rotation (34) du système à ventilateur est agencé transversalement à un axe de rotation (45) de la pompe de recirculation (46).

7. Appareil électrique selon l'une des revendications précédentes, **caractérisé en ce que** le radiateur (38) et le système à ventilateur (24) sont agencés l'un derrière l'autre.

8. Appareil électrique selon l'une des revendications précédentes, **caractérisé en ce que** le radiateur (38) est agencé au-dessous du raccordement électrique (22) du dispositif d'alimentation en énergie (10).

9. Appareil électrique selon l'une des revendications précédentes, **caractérisé en ce que** la pompe de recirculation (46) comprend un moteur électrique avec un rotor à montage sphérique.

10. Appareil électrique selon la revendication 9, **caractérisé en ce qu'**une roue à aubes de la pompe de recirculation (46) est reliée avec le rotor.

11. Appareil électrique selon l'une des revendications précédentes, **caractérisé en ce qu'**il est prévu au moins un récipient de compensation (62) pour le liquide de refroidissement.

12. Appareil électrique selon la revendication 11, **caractérisé en ce que** ledit au moins un récipient de compensation (62) est intégré dans le dispositif d'alimentation en énergie (10).

13. Appareil électrique selon la revendication 11 ou 12, **caractérisé en ce que** ledit au moins un récipient de compensation (62) est agencé à côté de la pompe de recirculation (46).

14. Appareil électrique selon la revendication 11 ou 12, **caractérisé en ce que** ledit au moins un récipient de compensation est intégré dans la pompe de recirculation.

15. Appareil électrique selon l'une des revendications précédentes, **caractérisé en ce que** des composants (24, 38, 46) pour un système de refroidissement de liquide (40) sont intégrés dans le dispositif d'alimentation en énergie (10).

16. Appareil électrique selon l'une des revendications précédentes, **caractérisé en ce que** le système de refroidissement de liquide (40) est préalablement rempli de liquide de refroidissement dans une quantité telle qu'aucun reremplissage n'est nécessaire pendant une durée de vie prévue.
